# FASCICULE DE BREVET EUROPEEN

(11) **EP 4 436 836 B1**
(45) Date de publication et mention de la délivrance du brevet: **03.09.2025**
(21) Numéro de dépôt: 22821483.9
(22) Date de dépôt: 22.11.2022
(51) Int. Cl.: B60R 13/02

(54) **ELÉMENT DE GARNISSAGE COMPRENANT UNE SURFACE EXTERNE PRÉSENTANT DIFFÉRENTS ASPECTS**
VERKLEIDUNGSELEMENT MIT EINER AUSSENFLÄCHE MIT UNTERSCHIEDLICHEM AUSSEHEN
LINER ELEMENT COMPRISING AN OUTER SURFACE HAVING DIFFERENT APPEARANCES

(30) Priorité: 24.11.2021 FR 2112442
(43) Date de publication de la demande: 02.10.2024
(73) Titulaire: Faurecia Intérieur Industrie, 92000 Nanterre (FR); Stellantis Auto SAS, 78300 Poissy (FR)
(72) Inventeur: BEAU, Godefroy, 92250 La Garenne Colombes (FR); COUPEROT, Hélène, 95300 PONTOISE (FR)
(74) Mandataire: Lavoix
(86) Numéro de dépôt international: PCT/EP2022/082863
(87) Numéro de publication internationale: WO 2023/094401

(56) Documents cités:
- EP-A1- 2 428 408
- DE-A1- 102016 217 949
- US-A1- 2016 265 237
- US-A1- 2020 391 673

## Description

La présente invention concerne un élément de garnissage de véhicule, du type définissant une surface externe formant une zone visible de l'élément de garnissage, ledit élément de garnissage comprenant au moins une première couche d'aspect, formant une première zone de la surface externe, dans laquelle seule ladite première couche d'aspect est visible, et une deuxième couche d'aspect, formant une deuxième zone de la surface externe, dans laquelle seule ladite deuxième couche d'aspect est visible.

L'invention concerne également un procédé de réalisation d'un tel élément de garnissage.

Afin d'améliorer l'aspect de l'habitacle d'un véhicule, il est connu de prévoir des éléments de garnissage, tels que des panneaux de porte, une planche de bord et autres, pour habiller l'intérieur du véhicule.

Pour conférer une esthétique particulière à un élément de garnissage, il peut être souhaitable que son aspect diffère d'une zone de sa surface externe à une autre. En d'autres termes, une première zone de l'élément de garnissage présente un premier aspect et une deuxième zone présente un deuxième aspect, différent du premier aspect, les différents aspects étant par exemple liés à l'utilisation de matériaux différents.

Cependant, dans ce cas, la transition entre la première zone et la deuxième zone est généralement abrupte et se fait par exemple le long d'une ligne séparant la première zone de la deuxième zone.

L'un des buts de l'invention est d'améliorer l'aspect d'un tel élément de garnissage en proposant un élément de garnissage dont l'aspect varie et présentant une zone de transition particulière entre les zones d'aspects différents. EP2428408 divulgue un élément de garnissage de véhicule définissant une surface externe formant une zone visible de l'élément de garnissage, ledit élément de garnissage comprenant au moins une première couche d'aspect, formant une première zone de la surface externe, dans laquelle seule ladite première couche d'aspect est visible, la première couche d'aspect formant aussi une deuxième zone de la surface externe, dont la surface externe comprend au moins une zone de transition s'étendant entre la première zone et la deuxième zone.

A cet effet, l'invention concerne un élément de garnissage du type précité, dans lequel la surface externe comprend au moins une zone de transition s'étendant entre la première zone et la deuxième zone, la première couche d'aspect s'étendant sur la deuxième couche d'aspect et comprenant une pluralité d'ouvertures fermées par la deuxième couche d'aspect dans ladite zone de transition de sorte que la première couche d'aspect et la deuxième couche d'aspect sont visibles dans ladite zone de transition.

Ainsi, la zone de transition présente un aspect particulier obtenu à la fois par l'aspect de la première couche d'aspect et par celui de la deuxième couche d'aspect. Un grand nombre de configurations de la zone de transition peuvent être envisagées, ce qui offre une grande variété d'aspects d'éléments de garnissage possible.

L'élément de garnissage peut comprendre l'une ou plusieurs des caractéristiques suivantes, prises isolément ou selon toute combinaison techniquement envisageable :
- l'élément de garnissage comprend en outre une couche de support s'étendant sur l'envers d'au moins la deuxième couche d'aspect, ladite couche de support définissant une surface interne de l'élément de garnissage, opposée à la surface externe ;
- la couche de support comprend une pluralité de parties en saillie dans la zone de transition, lesdites parties en saillie s'étendant en regard des ouvertures de la première couche d'aspect et pressant la deuxième couche d'aspect dans lesdites ouvertures ;
- la surface externe de la deuxième couche d'aspect affleure la surface externe de la première couche d'aspect au moins dans la zone de transition ;
- la surface visible de la première couche d'aspect diminue et la surface visible de la deuxième couche d'aspect augmente dans la zone de transition en allant de la première zone vers la deuxième zone ;
- la concentration d'ouvertures et/ou une dimension des ouvertures dans la première couche d'aspect augmentent dans la zone de transition en allant de la première zone vers la deuxième zone ;
- la surface visible de la première couche d'aspect et la surface visible de la deuxième couche d'aspect sont sensiblement égales dans la zone de transition ;
- la première couche d'aspect est une couche de matériau ligneux ou métallique ;
- la deuxième couche d'aspect est une couche de matériau textile ou une peau en matériau synthétique ou naturel.

Selon un autre aspect, l'invention concerne également un procédé de réalisation d'un élément de garnissage tel que décrit ci-dessus, comprenant les étapes suivantes :
- réaliser une première couche d'aspect comprenant une première partie et une partie de transition comprenant une pluralité d'ouvertures, ladite partie de transition s'étendant entre un bord de transition et un bord périphérique de ladite première couche d'aspect,
- prévoir une deuxième couche d'aspect comprenant une deuxième partie et une partie de transition et disposer ladite partie de transition de la deuxième couche d'aspect contre la partie de transition de la première couche d'aspect, la deuxième partie de la deuxième d'aspect étant adjacente à la partie de transition de la première couche d'aspect,
- réaliser une couche de support par injection sur l'envers d'au moins la deuxième couche d'aspect, l'injection de ladite couche de support pressant la deuxième couche d'aspect dans les ouvertures de la première couche d'aspect dans la partie de transition desdites première et deuxième couches d'aspect.

D'autres aspects et avantages de l'invention apparaîtront à la lecture de la description qui suit, donnée à titre d'exemple et faite en référence aux dessins annexés, dans lesquels :
[Fig 1] - la Fig. 1 est une représentation schématique de l'extérieur d'un élément de garnissage présentant un exemple d'aspect pouvant être obtenu par l'invention,
[Fig 2] - la Fig. 2 est une représentation schématique en coupe selon l'axe II-II de la Fig. 1, et
[Fig 3] - la Fig. 3 est une représentation schématique de l'extérieur d'un élément de garnissage présentant un autre exemple d'aspect pouvant être obtenu par l'invention.

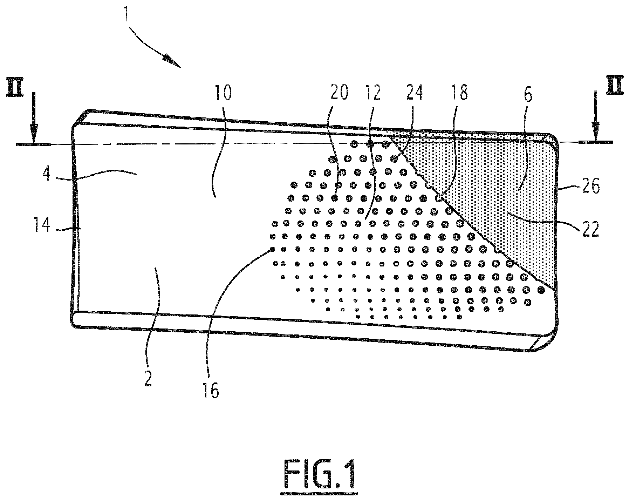

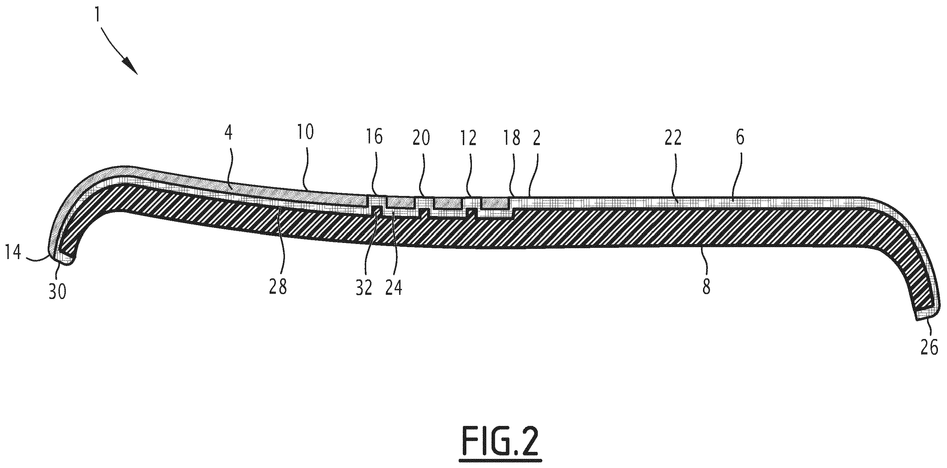

En référence aux Figs. 1 et 2, on décrit un élément de garnissage 1 de véhicule définissant une surface externe 2. L'expression « externe » désigne ce qui est tourné vers l'extérieur de l'élément de garnissage 1, c'est-à-dire tourné vers l'habitacle du véhicule dans lequel est installé l'élément de garnissage. L'expression « interne » désigne ce qui est tourné vers l'intérieur de l'élément de garnissage 1, c'est-à-dire tourné vers la partie du véhicule sur laquelle l'élément de garnissage est installé.

La surface externe 2 de l'élément de garnissage 1 est destinée à être visible depuis l'habitacle du véhicule dans lequel l'élément de garnissage1 est installé. Ainsi, la surface externe 2 confère son aspect à l'élément de garnissage 1.

L'élément de garnissage 1 comprend au moins une première couche d'aspect 4 et une deuxième couche d'aspect 6 définissant chacune une zone de la surface externe 2 de l'élément de garnissage 1, comme cela sera décrit ultérieurement. Selon un mode de réalisation, l'élément de garnissage 1 comprend en outre une couche de support 8 s'étendant sur l'envers d'au moins la deuxième couche d'aspect 6, comme représenté sur la Fig. 2.

La première couche d'aspect 4 et la deuxième couche d'aspect 6 présentent un aspect différent de sorte que la surface externe 2 présente au moins deux aspects distincts. Selon un mode de réalisation, la première couche d'aspect 4 et la deuxième couche d'aspect 6 sont réalisés en des matériaux différents.

La première couche d'aspect 4 comprend une première partie 10 et une partie de transition 12 s'étendant dans la continuité l'une de l'autre et venues de matière l'une avec l'autre. Selon une direction principale de l'élément de garnissage, correspondant par exemple à la longueur, à la largeur ou à la hauteur de l'élément de garnissage, la première partie de la couche d'aspect s'étend d'un bord périphérique 14 à un bord de transition 16 de la première couche d'aspect 4 et la partie de transition 12 s'étend du bord de transition 16 à un bord périphérique opposé 18 de la première couche d'aspect 4. Comme cela sera décrit ultérieurement plus en détail, le bord de transition 16 peut présenter toute forme souhaitée et ne s'étend pas nécessairement de façon rectiligne ni sur toute la dimension de la surface externe 2 perpendiculaire à la direction principale. Cela s'applique également au bord périphérique opposé 18. Ainsi, la forme et la surface de la partie de transition 12 peuvent être choisies en fonction de l'aspect que l'on souhaite conférer à l'élément de garnissage 1.

Dans la première partie 10, la première couche d'aspect 4 est, selon les modes de réalisation représentés sur les figures, pleine et ininterrompue. En variante, la première partie 10 peut comprendre une ou plusieurs ouvertures par exemple pour le passage d'éléments fonctionnels au travers de l'élément de garnissage afin de rendre ces éléments fonctionnels accessibles aux passagers du véhicule. Dans ce cas, la couche de support 8 comprend une ou plusieurs ouvertures en regard de la ou des ouvertures dans la première partie 10. La surface externe de la première partie 10 forme une première zone de la surface externe 2 de l'élément de garnissage, dans laquelle seule la première couche d'aspect 4 est visible. Par « seule la première couche d'aspect 4 est visible », on entend que la surface externe 2 de l'élément de garnissage 1 n'est formée que par la première couche d'aspect 4. Ainsi, d'autres éléments peuvent être visibles dans la première zone, ces éléments ne faisant pas partie de l'élément de garnissage, tels qu'un élément fonctionnel passant par une ouverture dans la première couche d'aspect, par exemple.

Dans la partie de transition 12, la première couche d'aspect 4 comprend une pluralité d'ouvertures 20 traversant la première couche d'aspect 4. Par « traversant la première couche d'aspect 4 », on entend que les ouvertures débouchent dans la surface externe et dans la surface interne et traversent toute l'épaisseur de la première couche d'aspect 4. Les ouvertures 20 sont espacées les unes des autres de sorte que la première couche d'aspect 4 reste visible entre les ouvertures 20. Comme cela sera décrit plus en détail ultérieurement, en fonction de l'aspect que l'on souhaite conférer à l'élément de garnissage, le nombre, les dimensions, la répartition et/ou la concentration des ouvertures 20 dans la partie de transition 12 peuvent varier d'un élément de garnissage 1 à un autre.

La première couche d'aspect 4 est par exemple une couche de matériau ligneux, tel que du bois naturel ou reconstitué, de matériau métallique, tel que de l'aluminium, ou autre, tel qu'une couche de matériau carbone. Il est entendu que d'autres matériaux peuvent être envisagés en fonction de l'aspect que l'on souhaite conférer à l'élément de garnissage. Ainsi, la première couche d'aspect 4 peut être par exemple formée par une peau en matériau naturel ou synthétique, ou autre. De préférence, la première couche d'aspect 4 présente une certaine rigidité, notamment une rigidité supérieure à celle de la deuxième couche d'aspect 6. La première couche d'aspect 4 présente par exemple une épaisseur comprise entre 0.5 mm et 1 mm, par exemple voisine de 0,7 mm.

La deuxième couche d'aspect 6 comprend une deuxième partie 22 et une partie de transition 24 s'étendant dans la continuité l'une de l'autre et venues de matière l'une avec l'autre. Selon la direction principale, la deuxième partie 22 s'étend d'un bord périphérique 26 jusqu'au bord périphérique opposé 18 de la première couche de revêtement 4. La partie de transition 24 s'étend à partir du bord périphérique opposé 18 jusqu'au bord de transition 16.

Dans la deuxième partie 22, la deuxième couche d'aspect 6 est, selon les modes de réalisation représentés sur les figures, pleine et ininterrompue. En variante, la deuxième partie 22 peut comprendre une ou plusieurs ouvertures par exemple pour le passage d'éléments fonctionnels au travers de l'élément de garnissage afin de rendre ces éléments fonctionnels accessibles aux passagers du véhicule. Dans ce cas, la couche de support 8 comprend une ou plusieurs ouvertures en regard de la ou des ouvertures dans la deuxième partie 22. La surface externe de la deuxième partie 22 forme une deuxième zone de la surface externe 2 de l'élément de garnissage 1, dans laquelle seule la deuxième couche d'aspect 6 est visible. Par « seule la deuxième couche d'aspect 6 est visible », on entend que la surface externe 2 de l'élément de garnissage 1 n'est formée que par la deuxième couche d'aspect 6. Ainsi, d'autres éléments peuvent être visibles dans la deuxième zone, ces éléments ne faisant pas partie de l'élément de garnissage, tels qu'un élément fonctionnel passant par une ouverture dans l'élément de garnissage, par exemple.

Comme représenté sur la Fig. 2, la partie de transition 24 de la deuxième couche d'aspect 6 s'étend contre la surface interne, également appelé envers, de la première couche d'aspect 4, au moins en regard de la partie de transition 12 de cette première couche d'aspect 4. En d'autres termes, la partie de transition 24 s'étend en regard de la partie de transition 12 et des ouvertures 20 s'étendant dans cette partie de transition de sorte que la deuxième couche d'aspect 6 est visible par ces ouvertures 20 dans la partie de transition 12. Ainsi, dans la partie de transition 12 de la première couche d'aspect 4 et la partie de transition 24 de la deuxième couche d'aspect 6 définissent ensemble une zone de transition de la surface externe 2 de l'élément de garnissage, la zone de transition s'étendant entre la première zone et la deuxième zone.

Selon un mode de réalisation plus particulièrement visible sur la Fig. 2, la deuxième couche d'aspect 6 comprend en outre une partie d'envers 28 venue de matière avec la partie de transition 24 et s'étendant dans la continuité de celle-ci contre l'envers de la première couche d'aspect 4 en regard de la première partie 10. La partie d'envers 28 s'étend ainsi du bord de transition 16 jusqu'à un bord d'extrémité 30 s'étendant par exemple en regard du bord périphérique 14 de la première partie 10 de la première couche d'aspect 4. Ainsi, selon ce mode de réalisation, la deuxième couche d'aspect 6 s'étend sur toute la surface de l'élément de garnissage 1, la deuxième couche d'aspect 6 formant la deuxième zone de la surface externe 2 dans la deuxième partie 22 et s'étendant sous la première couche d'aspect 4 dans la zone de transition et dans la première zone.

La deuxième couche d'aspect 6 est par exemple une couche de matériau textile, un film en matériau synthétique ou une peau en matériau naturel ou synthétique, ou autre. De préférence, la première couche d'aspect 4 présente une certaine souplesse, notamment une souplesse supérieure à celle de la première couche d'aspect 4. En d'autres termes, la deuxième couche d'aspect 6 est de préférence moins rigide que la première couche d'aspect 4 de sorte que la deuxième couche d'aspect 6 présente une déformabilité supérieure à celle de la première couche d'aspect 4. La deuxième couche d'aspect 6 présente par exemple une épaisseur comprise entre 0.5 mm et 1 mm, par exemple voisine de 0,7 mm. Selon un mode de réalisation, la deuxième couche d'aspect 6 présente une épaisseur sensiblement égale à celle de la première couche d'aspect 4.

La couche de support 8 s'étend sur l'envers d'au moins la deuxième couche d'aspect 6 et forme la surface interne de l'élément de garnissage 1. Plus particulièrement, lorsque la deuxième couche d'aspect 6 comprend une partie d'envers 28, la couche de support 8 s'étend sur l'envers de la deuxième couche d'aspect 6 en regard de la première zone, la deuxième zone et la zone de transition de la surface externe 2 de l'élément de garnissage 1. Lorsqu'une telle partie d'envers n'est pas prévue, la couche de support 8 s'étend sur l'envers la première couche d'aspect 4 en regard de la première zone et sur l'envers de la deuxième couche d'aspect 6 en regard de la zone de transition et de la deuxième zone de la surface externe 2 de l'élément de garnissage 1. La couche de support 8 confère plus particulièrement sa rigidité et sa forme à l'élément de garnissage 1, la première et la deuxième couches d'aspect 4 et 6 épousant la forme de la couche de support 8. La couche de support 8 est par exemple réalisée par injection d'un matériau synthétique, tel qu'un matériau plastique ou un matériau composite comprenant une résine chargée avec des fibres naturelles et/ou synthétiques. La couche de support 8 présente par exemple une épaisseur sensiblement comprise entre 1 mm et 4 mm.

Dans la zone de transition de la surface externe 2 de l'élément de garnissage 1, la première couche d'aspect 4 et la deuxième couche d'aspect 6 sont visibles depuis l'extérieur de l'élément de garnissage 1. En d'autres termes, la surface externe de la partie de transition 12 de la première couche d'aspect 4 et la surface externe de la partie de transition 24 de la deuxième couche d'aspect 6 forment la zone de transition de la surface externe de l'élément de garnissage 1, dans laquelle la première couche d'aspect 4 et la deuxième couche d'aspect 6 sont visibles, comme représenté sur les Figs. 1, 3 et 4.

Selon un mode de réalisation particulièrement avantageux, la surface externe de la deuxième couche d'aspect 6 affleure la surface externe de la première couche d'aspect 4 dans la zone de transition. Par « affleurer », on entend que la surface externe de la deuxième couche d'aspect 6 s'étend dans la continuité de la surface externe de la première couche d'aspect 4, sensiblement sans écart entre ces surfaces externes selon la direction de l'épaisseur de l'élément de garnissage, comme représenté sur la Fig. 2. Ainsi, dans la zone de transition, la deuxième couche d'aspect 6 ferme donc les ouvertures 20 et s'étend au niveau de l'embouchure des ouvertures 20 dans la surface externe de la première couche d'aspect 4. En d'autres termes, dans la zone de transition, la surface externe de la deuxième couche d'aspect 6 ne s'étend pas en creux ou en saillie de la surface externe de la première couche d'aspect 4. Ainsi, la surface externe 2 de l'élément de garnissage 1 est sensiblement continue, la première zone, la zone de transition et la deuxième zone s'étendant dans la continuité les unes des autres, comme représenté sur la Fig. 2. Il est cependant entendu que la surface externe n'est pas nécessairement plane mais que celle-ci peut présenter une forme tridimensionnelle, notamment en fonction de la partie de l'habitacle sur laquelle l'élément de garnissage 1 doit être installé.

Pour rendre la surface externe de la deuxième couche d'aspect 6 affleurante avec la surface externe de la première couche d'aspect 4 dans la zone de transition, le couche de support 8 comprend par exemple une pluralité de parties en saillie 32 dans la zone de transition, les parties en saillie 32 s'étendant en regard des ouvertures 20 de la première couche d'aspect 4 de sorte à presser la deuxième couche d'aspect 6 dans les ouvertures 20 et ainsi introduire la deuxième couche d'aspect 6 dans les ouvertures 20 jusqu'à la surface externe de la première couche d'aspect 4, comme représenté sur la Fig. 2. Ainsi, les parties en saillie 32 poussent la deuxième couche d'aspect 6 dans les ouvertures 20 de sorte à déformer localement la couche d'aspect 6 pour que celle-ci pénètre dans et ferme les ouvertures 20. Une telle surface externe sensiblement continue et lisse dans la zone de transition de l'élément de garnissage peut être obtenue en réalisant la couche de support 8 par injection sur l'envers de la première couche d'aspect 4 et de la deuxième couche d'aspect 6, comme cela sera décrit plus en détail ultérieurement.

En rendant la deuxième couche d'aspect 6 visible dans les ouvertures 20 tandis que la première couche d'aspect 4 est visible entre les ouvertures 20, on comprend donc qu'une grande variété d'aspects peut être conférée à la zone de transition selon l'agencement des ouvertures 20 dans la première couche d'aspect 4. Ainsi, selon la forme, les dimensions, la répartition et le nombre d'ouvertures 20, différents aspects de la zone de transition peuvent être obtenus.

Un motif quelconque peut être choisi. Toute forme de motif peut être obtenue, y compris des motifs figuratifs, tels qu'un logo ou autre.

Ainsi, la première couche d'aspect 4 peut présenter une surface visible supérieure ou égale à celle de la deuxième couche d'aspect 6, comme représenté sur la Fig. 1. Comme visible sur cette figure, la surface visible de la deuxième couche d'aspect 6 devient de plus en plus grande tandis que la surface visible de la première couche d'aspect 4 devient de plus en plus petite en allant du bord de transition 16 au bord périphérique opposé 18. Cela est obtenu en augmentant la taille et la concentration des ouvertures 20 dans la zone de transition en allant du bord de transition 16 au bord périphérique opposé 18, c'est-à-dire en allant de la première zone à la deuxième zone. Il est entendu que seul l'un de ces paramètres pourrait être modifié pour obtenir ce résultat. En variante, les ouvertures peuvent être agencées pour que la surface visible de la première couche d'aspect 4 soit égale à la surface visible de la deuxième couche d'aspect 6, par exemple en choisissant des ouvertures 20 de forme et de dimensions identiques et espacées les unes des autres de sorte que la surface entre les ouvertures soit égale à la surface dans les ouvertures. Selon une autre variante, la surface visible de la première couche d'aspect pourrait augmenter et la surface visible de la deuxième couche d'aspect pourrait diminuer dans la zone de transition en allant de la première zone à la deuxième zone.

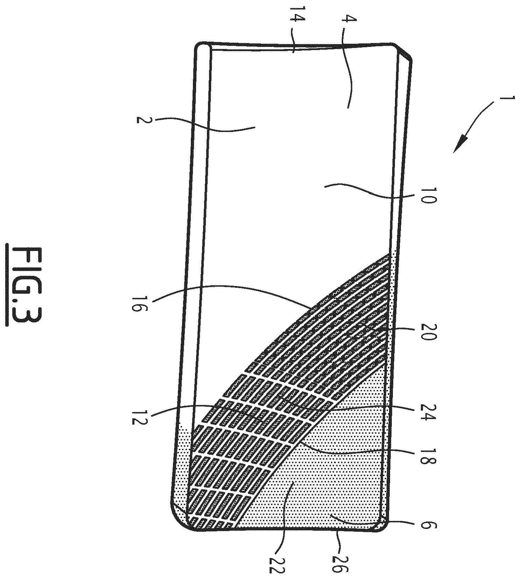

Selon la forme et les dimensions du bord de transition 16 et du bord périphérique opposé 18, le contour de la zone de transition peut être défini. Ainsi, à titre d'exemple, la Fig. 3 montre une zone de transition en forme de croissant de lune, dans laquelle la deuxième couche d'aspect 6 forme des rayures interrompues (ou en pointillés) dans la première couche d'aspect 4. Selon cet exemple, la deuxième couche d'aspect 6 forme un motif régulier dans la première couche d'aspect 4 et la deuxième couche d'aspect 6 forme une surface visible supérieure à la surface visible de la première couche d'aspect 4 dans la zone de transition.

Pour que la deuxième couche d'aspect 6 puisse entrer dans les ouvertures 20 de la première couche d'aspect 4, notamment lorsque la couche de support 8 presse la deuxième couche d'aspect 6 dans les ouvertures 20, la plus petite dimension de celles-ci doit toutefois être supérieure ou égale à quatre fois l'épaisseur minimale de la première couche d'aspect 4 et quatre fois l'épaisseur minimale de la deuxième couche d'aspect 6. La plus petite dimension est de préférence supérieure à 3 mm.

On comprend que l'élément de garnissage 1 décrit ci-dessus peut présenter une grande variété d'aspects, en choisissant l'aspect de la première couche de support 4 et de la deuxième couche de support 6 et en choisissant l'agencement des ouvertures 20 dans la zone de transition. Il est entendu qu'un élément de garnissage 1 peut comprendre plus d'une zone transition, par exemple en prévoyant une troisième couche d'aspect et en faisant passer celle-ci sous la première couche d'aspect du côté du bord périphérique 14 et en prévoyant des ouvertures au voisinage de ce bord périphérique 14. En variante, la première couche d'aspect peut passer sous la troisième couche d'aspect au voisinage du bord périphérique 14, la troisième couche d'aspect comprenant alors des ouvertures. Selon une autre variante, la troisième couche d'aspect peut être agencée pour former une zone de transition avec la deuxième couche d'aspect 6 du côté du bord périphérique 26 en faisant passer la troisième couche d'aspect sous ou sur la deuxième couche d'aspect 6 dans cette zone de transition et en prévoyant des ouvertures dans la deuxième couche d'aspect ou de la troisième couche d'aspect en conséquence. Cela permet d'augmenter encore la variété d'aspects que l'on peut conférer à un élément de garnissage 1.

Un procédé de réalisation d'un élément de garnissage 1 selon un mode de réalisation tel que décrit ci-dessus va à présent être décrit.

Une première couche d'aspect 4 est d'abord prévue et une pluralité d'ouvertures est formée dans une partie de transition 12 de celle-ci. Une deuxième couche d'aspect 6 est disposée par rapport à la première couche d'aspect 4 de façon à ce que la deuxième couche d'aspect comprenne une deuxième partie 22 adjacente à la partie de transition 12 de la première couche d'aspect 4 et une partie de transition 24 s'étendant sur l'envers de la première couche d'aspect 4. Selon un mode de réalisation, la deuxième couche d'aspect 6 peut en outre comprendre une partie d'envers 28 s'étendant sur l'envers de la première partie 10 de la première couche d'aspect 4.

L'ensemble formé par la première couche d'aspect 4 et la deuxième couche d'aspect 6 est ensuite placé contre la paroi d'une cavité de moulage, présentant la forme de l'élément de garnissage à réaliser. La paroi contre laquelle est placé l'ensemble présente plus particulièrement la forme de la surface externe 2 de l'élément de garnissage 1 à réaliser. En variante, la première couche d'aspect 4 et la deuxième couche d'aspect 6 sont placées l'une après l'autre contre la paroi de la cavité de moulage. Dans ce cas, la première couche d'aspect est de préférence préformée avant d'être placée dans la cavité de moulage, c'est-à-dire que la première couche d'aspect 4 a préalablement subi une étape de mise en forme afin que celle-ci acquière la forme qu'elle doit avoir dans l'élément de garnissage fini.

Un matériau formant la couche de support 8 est ensuite injecté dans l'outil de réalisation sur l'envers d'au moins la deuxième couche d'aspect 6. L'injection du matériau entraîne le pressage de la deuxième couche d'aspect 6 dans les ouvertures 20 de la première couche d'aspect 4 de sorte que la deuxième couche d'aspect 6 ferme les ouvertures 20 et que des parties en saille 32 de la couche de support 8 sont créées. On notera qu'en choisissant une deuxième couche d'aspect 6 plus déformable que la première couche d'aspect 4, cette opération est facilitée, la deuxième couche d'aspect 6 pénétrant dans les ouvertures 20 sans déformer celles-ci de sorte que la deuxième couche d'aspect 6 peut épouser la forme les ouvertures 20 sans créer de défauts sur la surface externe 2 de l'élément de garnissage 1. L'élément de garnissage 1 ainsi formé peut ensuite être retiré de la cavité de moulage. Dans l'élément de garnissage ainsi formé, la surface externe de la deuxième couche d'aspect 6 est avantageusement affleurante avec la surface externe de la première couche d'aspect 4 dans la zone de transition, comme décrit précédemment. En variante, la couche de support 8 peut être réalisée par thermocompression ou autre.

## Revendications

1. Elément de garnissage (1) de véhicule définissant une surface externe (2) formant une zone visible de l'élément de garnissage, ledit élément de garnissage comprenant au moins une première couche d'aspect (4), formant une première zone de la surface externe (2), dans laquelle seule ladite première couche d'aspect (4) est visible, et une deuxième couche d'aspect (6), formant une deuxième zone de la surface externe (2), dans laquelle seule ladite deuxième couche d'aspect (6) est visible, **caractérisé en ce que** la surface externe comprend au moins une zone de transition s'étendant entre la première zone et la deuxième zone, la première couche d'aspect (4) s'étendant sur la deuxième couche d'aspect (6) et comprenant une pluralité d'ouvertures (20) fermées par la deuxième couche d'aspect (6) dans ladite zone de transition de sorte que la première couche d'aspect (4) et la deuxième couche d'aspect (6) sont visibles dans ladite zone de transition.

2. Elément de garnissage selon la revendication 1, comprenant en outre une couche de support (8) s'étendant sur l'envers d'au moins la deuxième couche d'aspect (6), ladite couche de support (8) définissant une surface interne de l'élément de garnissage, opposée à la surface externe (2).

3. Elément de garnissage selon la revendication 2, dans lequel la couche de support (8) comprend une pluralité de parties en saillie (32) dans la zone de transition, lesdites parties en saillie (32) s'étendant en regard des ouvertures (20) de la première couche d'aspect (4) et pressant la deuxième couche d'aspect (6) dans lesdites ouvertures (20).

4. Elément de garnissage selon l'une quelconque des revendication 1 à 3, dans lequel la surface externe de la deuxième couche d'aspect (6) affleure la surface externe de la première couche d'aspect (4) au moins dans la zone de transition.

5. Elément de garnissage selon l'une quelconque des revendications 1 à 4, dans lequel la surface visible de la première couche d'aspect (4) diminue et la surface visible de la deuxième couche d'aspect (6) augmente dans la zone de transition en allant de la première zone vers la deuxième zone.

6. Elément de garnissage selon la revendication 5, dans lequel la concentration d'ouvertures (20) et/ou une dimension des ouvertures (20) dans la première couche d'aspect (14) augmentent dans la zone de transition en allant de la première zone vers la deuxième zone.

7. Elément de garnissage selon l'une quelconque des revendications 1 à 4, dans lequel la surface visible de la première couche d'aspect (4) et la surface visible de la deuxième couche d'aspect (6) sont sensiblement égales dans la zone de transition.

8. Elément de garnissage selon l'une quelconque des revendications 1 à 7, dans lequel la première couche d'aspect (4) est une couche de matériau ligneux ou métallique.

9. Elément de garnissage selon l'une quelconque des revendications 1 à 8, dans lequel la deuxième couche d'aspect (6) est une couche de matériau textile ou une peau en matériau synthétique ou naturel.

10. Procédé de réalisation d'un élément de garnissage selon l'une quelconque des revendications 2 à 9, comprenant les étapes suivantes :
- réaliser une première couche d'aspect (4) comprenant une première partie (10) et une partie de transition (12) comprenant une pluralité d'ouvertures (20), ladite partie de transition s'étendant entre un bord de transition (16) et un bord périphérique (18) de ladite première couche d'aspect (4),
- prévoir une deuxième couche d'aspect (6) comprenant une deuxième partie (22) et une partie de transition (24) et disposer ladite partie de transition (24) de la deuxième couche d'aspect (6) contre la partie de transition (12) de la première couche d'aspect (4), la deuxième partie (22) de la deuxième d'aspect (6) étant adjacente à la partie de transition (12) de la première couche d'aspect (4),
- réaliser une couche de support (8) par injection sur l'envers d'au moins la deuxième couche d'aspect (6), l'injection de ladite couche de support (8) pressant la deuxième couche d'aspect (6) dans les ouvertures (20) de la première couche d'aspect (4) dans la partie de transition (12, 24) desdites première et deuxième couches d'aspect (4, 6).

## Patentansprüche

1. Verkleidungselement (1) für Fahrzeug, das eine Außenfläche (2) definiert, die einen sichtbaren Bereich des Verkleidungselements bildet, das Verkleidungselement umfassend mindestens eine erste Aspektschicht (4), die einen ersten Bereich der Außenfläche (2) bildet, wobei nur die erste Aspektschicht (4) sichtbar ist, und eine zweite Aspektschicht (6), die einen zweiten Bereich der Außenfläche (2) bildet, wobei nur die zweite Aspektschicht (6) sichtbar ist, **dadurch gekennzeichnet, dass** die Außenfläche mindestens einen Übergangsbereich umfasst, der sich zwischen dem ersten Bereich und dem zweiten Bereich erstreckt, sich die erste Aspektschicht (4) über die zweite Aspektschicht (6) erstreckt und eine Vielzahl von Öffnungen (20) umfasst, die von der zweiten Aspektschicht (6) in dem Übergangsbereich geschlossen werden, sodass die erste Aspektschicht (4) und die zweite Aspektschicht (6) in dem Übergangsbereich sichtbar sind.

2. Verkleidungselement nach Anspruch 1, ferner eine Trägerschicht (8) umfassend, die sich auf der Rückseite von mindestens der zweiten Aspektschicht (6) erstreckt, wobei die Trägerschicht (8) eine Innenfläche des Verkleidungselements gegenüber der Außenfläche (2) definiert.

3. Verkleidungselement nach Anspruch 2, wobei die Trägerschicht (8) eine Vielzahl von hervorstehenden Abschnitten (32) in dem Übergangsbereich umfasst, wobei sich die vorstehenden Abschnitte (32) gegenüber den Öffnungen (20) der ersten Aspektschicht (4) erstrecken und die zweite Aspektschicht (6) in die Öffnungen (20) pressen.

4. Verkleidungselement nach einem der Ansprüche 1 bis 3, wobei die Außenfläche der zweiten Aspektschicht (6) zumindest in dem Übergangsbereich mit der Außenfläche der ersten Aspektschicht (4) bündig ist.

5. Verkleidungselement nach einem der Ansprüche 1 bis 4, wobei die sichtbare Fläche der ersten Aspektschicht (4) abnimmt und die sichtbare Fläche der zweiten Aspektschicht (6) in dem Übergangsbereich von dem ersten Bereich zu dem zweiten Bereich zunimmt.

6. Verkleidungselement nach Anspruch 5, wobei die Konzentration von Öffnungen (20) und/oder eine Größe der Öffnungen (20) in der ersten Aspektschicht (14) in dem Übergangsbereich auf dem Weg von dem ersten Bereich zu dem zweiten Bereich zunimmt.

7. Verkleidungselement nach einem der Ansprüche 1 bis 4, wobei die sichtbare Fläche der ersten Aspektschicht (4) und die sichtbare Fläche der zweiten Aspektschicht (6) in dem Übergangsbereich im Wesentlichen gleich sind.

8. Verkleidungselement nach einem der Ansprüche 1 bis 7, wobei die erste Aspektschicht (4) eine Schicht aus holzigem oder metallischem Material ist.

9. Verkleidungselement nach einem der Ansprüche 1 bis 8, wobei die zweite Aspektschicht (6) eine Schicht aus einem Textilmaterial oder eine Haut aus einem synthetischen oder natürlichen Material ist.

10. Verfahren zur Herstellung eines Verkleidungselements nach einem der Ansprüche 2 bis 9, umfassend die folgenden Schritte:
- Anfertigen einer ersten Aspektschicht (4), umfassend einen ersten Abschnitt (10) und einen Übergangsabschnitt (12), umfassend eine Vielzahl von Öffnungen (20), wobei sich der Übergangsabschnitt zwischen einem Übergangsrand (16) und einem Umfangsrand (18) der ersten Aspektschicht (4) erstreckt,
- Bereitstellen einer zweiten Aspektschicht (6), umfassend einen zweiten Abschnitt (22) und einen Übergangsabschnitt (24), und Anordnen des Übergangsabschnitts (24) der zweiten Aspektschicht (6) gegen den Übergangsabschnitt (12) der ersten Aspektschicht (4), wobei der zweite Abschnitt (22) der zweiten Aspektschicht (6) angrenzend an den Übergangsabschnitt (12) der ersten Aspektschicht (4) ist;
- Anfertigen einer Trägerschicht (8) durch Injektion auf der Rückseite von mindestens der zweiten Aspektschicht (6), wobei das Einspritzen der Trägerschicht (8) die zweite Aspektschicht (6) in dem Übergangsbereich (12, 24) der ersten und der zweiten Aspektschicht (4, 6) in die Öffnungen (20) der ersten Aspektschicht (4) drückt.

## Claims

1. A vehicle trim element (1) defining an outer surface (2) forming a visible area of the trim element, said trim element comprising at least a first appearance layer (4), forming a first area of the outer surface (2), in which only said first appearance layer (4) is visible, and a second appearance layer (6), forming a second area of the outer surface (2), in which only said second appearance layer (6) is visible, **characterized in that** the outer surface comprises at least one transition area extending between the first area and the second area, the first appearance layer (4) extending over the second appearance layer (6) and comprising a plurality of openings (20) closed by the second appearance layer (6) in said transition area so that the first appearance layer (4) and the second appearance layer (6) are visible in said transition area.

2. The trim element according to claim 1, further comprising a support layer (8) extending on the back of at least the second appearance layer (6), said support layer (8) defining an inner surface of the trim element, opposite the outer surface (2).

3. The trim element according to claim 2, wherein the support layer (8) comprises a plurality of projecting parts (32) in the transition area, said projecting parts (32) extending opposite the openings (20) of the first appearance layer (4) and pressing the second appearance layer (6) into said openings (20).

4. The trim element according to any one of claims 1 to 3, wherein the outer surface of the second appearance layer (6) is flush with the outer surface of the first appearance layer (4) at least in the transition area.

5. The trim element according to any one of claims 1 to 4, wherein the visible surface of the first appearance layer (4) decreases and the visible surface of the second appearance layer (6) increases in the transition area from the first area to the second area.

6. The trim element according to claim 5, wherein the concentration of openings (20) and/or the size of the openings (20) in the first appearance layer (14) increases in the transition area going from the first area to the second area.

7. The trim element according to any one of claims 1 to 4, wherein the visible surface of the first appearance layer (4) and the visible surface of the second appearance layer (6) are substantially equal in the transition area.

8. The trim element according to any one of claims 1 to 7, wherein the first appearance layer (4) is a layer of ligneous or metallic material.

9. The trim element according to any one of claims 1 to 8, wherein the second appearance layer (6) is a layer of textile material or a skin of synthetic or natural material.

10. A method for producing a trim element according to any one of claims 2 to 9, comprising the following steps:
- providing a first appearance layer (4) comprising a first part (10) and a transition part (12) comprising a plurality of openings (20), said transition part extending between a transition edge (16) and a peripheral edge (18) of said first appearance layer (4),
- providing a second appearance layer (6) comprising a second part (22) and a transition part (24) and arranging said transition part (24) of the second appearance layer (6) against the transition part (12) of the first appearance layer (4), the second part (22) of the second appearance (6) being adjacent to the transition part (12) of the first appearance layer (4),
- producing a support layer (8) by injection on the back of at least the second appearance layer (6), the injection of said support layer (8) pressing the second appearance layer (6) into the openings (20) of the first appearance layer (4) in the transition part (12, 24) of said first and second appearance layers (4, 6).
